(19) Europäisches Patentamt
European Patent Office
Office européen des brevets

(11) **EP 2 163 915 A1**

(12) **DEMANDE DE BREVET EUROPEEN**

(43) Date de publication:
**17.03.2010 Bulletin 2010/11**

(51) Int Cl.:
***G01S 5/02*** (2010.01)

(21) Numéro de dépôt: **08164359.5**

(22) Date de dépôt: **15.09.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **Géomatic Ingénierie S.A.**
**1066 Epalinges (CH)**

(72) Inventeurs:
• **Pilet, Thierry**
  **1867 Ollon (CH)**
• **Luginbühl, Etienne**
  **1400 Yverdon-les-Bains (CH)**

(74) Mandataire: **Leman Consulting S.A.**
**Chemin de Précossy 31**
**1260 Nyon (CH)**

(54) **Procédé de détermination d'au moins un axe sur lequel se déplace un équipement mobile**

(57) La présente invention concerne un procédé de détermination d'au moins un axe sur lequel se déplace un équipement mobile. Ce procédé comporte les étapes de :
- détermination par ledit équipement mobile, d'un premier jeu d'informations de réception relatives à des signaux électromagnétiques reçus par cet équipement mobile dans une première position sur ledit axe;
- déplacement dudit équipement mobile sur cet axe, dans au moins une deuxième position distante de ladite première position;

- détermination par ledit équipement mobile, d'un deuxième jeu d'informations de réception relatives à des signaux électromagnétiques reçus par cet équipement mobile dans ladite deuxième position;
- élaboration d'une signature à partir desdits premier et deuxième jeux d'informations de réception;
- recherche dans une base de données, d'une signature mémorisée, similaire à la signature obtenue à partir desdits premier et deuxième jeux d'informations de réception;
- recherche de l'axe correspondant à ladite signature mémorisée obtenue par la base de données.

FIG. 1

**Description**

**DOMAINE TECHNIQUE**

La présente invention concerne un procédé de détermination d'au moins un axe le long duquel se déplace un équipement mobile, en particulier un équipement électronique tel qu'un téléphone portable, un assistant électronique du type PDA un ordinateur portable ou un autre équipement similaire.

**TECHNIQUE ANTERIEURE**

Actuellement, il existe des moyens bien connus pour indiquer la localisation géographique dans laquelle se trouve un utilisateur muni d'un équipement adéquat. Parmi ces moyens, on trouve notamment les appareils GPS (Global Positioning System), fonctionnant par triangulation à partir de satellites géostationnaires.

Ces appareils ont une précision de localisation relativement grande, mais comportent un certain nombre de limitations. En particulier, ils ne fonctionnent pas du tout ou mal à l'intérieur de bâtiments ou de tunnels ou plus généralement dans toutes les zones dans lesquelles ils n'ont pas de "connexion" directe avec au moins trois satellites. De plus, ils consomment une quantité d'énergie relativement importante et nécessitent un temps de mise en route assez long.

Il est actuellement également possible de localiser un équipement mobile tel qu'un téléphone portable. Selon les procédés connus, le téléphone détecte les cellules qu'il est en mesure de capter. Il mesure l'intensité des signaux reçus par chacune de ces cellules. En fonction des intensités mesurées, la position peut être calculée par triangulation en connaissant la position des cellules.

Ce procédé fonctionne à l'extérieur et l'intérieur des bâtiments et dans les zones non accessibles pour un GPS. Par contre, la précision du positionnement est relativement faible. L'incertitude de la mesure peut être de l'ordre de 50 à 500 m dans les zones urbaines, couvertes par un réseau dense d'émetteurs. Elle est de plusieurs kilomètres dans les zones rurales dans lesquelles le réseau d'émetteurs est généralement moins dense.

La présente invention se propose de réaliser un procédé de positionnement fiable, rapide, nécessitant une faible quantité d'énergie et fonctionnant dans n'importe quel environnement, en particulier dans un environnement fortement construit. Un tel procédé trouve notamment des applications dans la fourniture d'informations routières ou touristiques lors d'un déplacement, dans la gestion d'informations tarifaires, dans la gestion d'informations commerciales ou publicitaires dépendant de la localisation du récepteur, dans la sécurité des personnes et plus généralement dans tous les services dépendant de la localisation du bénéficiaire de ce service.

**EXPOSE DE L'INVENTION**

Le but de l'invention est atteint par un procédé de détermination d'au moins un axe sur lequel se déplace un équipement mobile, le procédé comportant les étapes de :

- détermination par ledit équipement mobile, d'un premier jeu d'informations de réception relatives à des signaux électromagnétiques reçus par cet équipement mobile dans une première position sur ledit axe;
- déplacement dudit équipement mobile sur cet axe, dans au moins une deuxième position distante de ladite première position;
- détermination par ledit équipement mobile, d'un deuxième jeu d'informations de réception relatives à des signaux électromagnétiques reçus par cet équipement mobile dans ladite deuxième position;
- élaboration d'une signature à partir desdits premier et deuxième jeux d'informations de réception;
- recherche dans une base de données, d'une signature mémorisée, similaire à la signature obtenue à partir desdits premier et deuxième jeux d'informations de réception;
- recherche de l'axe correspondant à ladite signature mémorisée obtenue par la base de données.

Pour la mise en oeuvre du procédé de l'invention, on utilise des moyens connus et largement répandus, tels qu'un téléphone portable par exemple, agissant en tant que capteur ou appareil de mesure. Ces moyens sont toutefois utilisés de façon nouvelle afin de déterminer de manière précise quelle est la localisation de l'utilisateur ou de l'équipement mobile. D'autres moyens utilisables pourraient être un ordinateur portable, un assistant du type PDA ou un appareil dédié à cette application.

Selon le procédé de l'invention, on ne cherche pas nécessairement à déterminer la position absolue du récepteur ou de l'utilisateur de ce récepteur. On cherche par contre à déterminer un itinéraire, un axe ou un tronçon d'axe sur lequel l'utilisateur se déplace. Dans le contexte de l'invention, un itinéraire est formé de plusieurs axes et un axe peut être formé de plusieurs tronçons.

Pour atteindre le but de l'invention, grâce au procédé décrit, il n'est pas nécessaire de disposer d'un appareil de mesure ayant une précision très grande. Il est possible d'utiliser de façon adéquate, un appareil peu précis tel qu'en particulier un téléphone portable, tout en assurant une grande fiabilité dans la localisation.

**DESCRIPTION SOMMAIRE DES DESSINS**

La présente invention et ses avantages seront mieux compris en référence aux figures annexées et à la description détaillée d'un mode de réalisation particulier, dans lesquelles :

- la figure 1 représente de façon schématique un réseau routier, comportant des points de localisation et des sources de signaux électromagnétiques;
- la figure 2 illustre sous forme de tableau, un ensemble de données liées aux points de localisation de la figure 1;
- la figure 3 représente schématiquement une signature représentative d'un axe du réseau routier de la figure 1;
- la figure 4 représente une signature obtenue lors d'une mesure par un équipement mobile;
- la figure 5 est une signature numérique similaire à celle de la figure 3;
- la figure 6 illustre un équipement mobile sur un axe du réseau routier de la figure 1; et
- la figure 7 représente un équipement mobile sur lequel est affiché la localisation obtenue par le procédé de l'invention.

## MANIERES DE REALISER L'INVENTION

Le procédé selon la présente invention comporte deux phases. Dans la première de ces phases, une base de données est constituée. Dans la deuxième phase, la base de données est utilisée en conjonction avec un équipement mobile muni d'un capteur tel qu'un téléphone mobile pour indiquer la localisation de cet équipement mobile.

## Constitution de la base de données

Dans la phase de constitution de la base de données, dans un premier temps, on inventorie des axes de transport sur lesquels on souhaite être en mesure de localiser un équipement mobile. Cet inventaire peut par exemple contenir des coordonnées géographiques représentatives de ces axes. Les axes répertoriés peuvent être notamment des routes et autoroutes ainsi que des lignes de train, de tram ou d'autres axes prévus pour des moyens de transport publics ou privés.

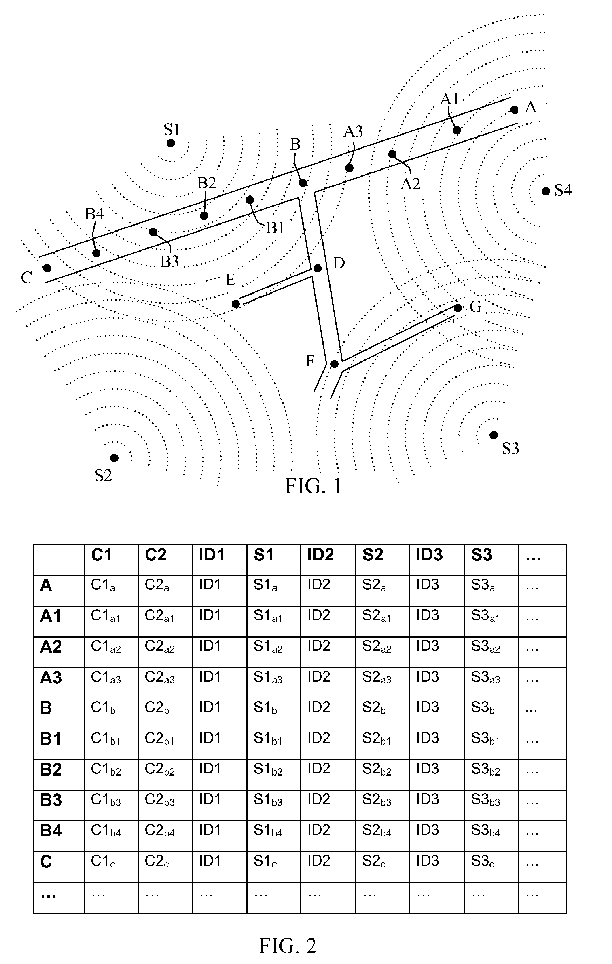

La figure 1 illustre de façon schématique une partie d'un réseau routier formé de quatre axes, ayant comme extrémités les points notés respectivement A et C; B et F; D et E; et F et G. Chaque axe ou chaque tronçon, c'est-à-dire portion d'axe peut être identifié par exemple par un numéro d'identification.

Il est à noter que les coordonnées des points peuvent être obtenues au moyen d'un GPS comme indiqué précédemment. Elles peuvent toutefois également être obtenues par d'autres moyens, par exemple par mesure terrestre depuis un ensemble de coordonnées de référence ou par calcul d'après une carte.

A titre d'exemple, les colonnes notées C1 et C2 du tableau de la figure 2 comportent, pour chaque point répertorié du réseau routier de la figure 1, les coordonnées de ces points.

Dans un deuxième temps, les axes répertoriés sont parcourus avec un appareil de mesure. Cet appareil est en particulier en charge de détecter et d'identifier des cellules ou des bornes émettant des signaux électromagnétiques. Ces cellules peuvent être de différentes natures. En particulier, elles peuvent être des cellules utilisées dans la téléphonie mobile, des bornes WiFi ou Wimax, des bornes prévues pour des radiofréquences RFID ou autres.

De telles cellules ou bornes, ou plus généralement de telles sources de signaux électromagnétiques sont référencés par S1, S2, S3 et S4 sur la figure 1.

Selon un mode de réalisation avantageux, l'appareil de mesure peut comprendre un GPS qui permet de localiser avec précision le point de mesure. A titre d'exemple concret, il est possible de parcourir un axe en effectuant chaque 5 secondes, une mesure comportant la position donnée par le GPS, la nature et les identifiant des cellules et des bornes captées par cet appareil de mesure et l'intensité des signaux captés pour chacune de ces cellules ou bornes. Il est également envisageable de placer l'appareil de mesure en différents endroits selon un plan par exemple et d'effectuer les mesures dans ces différents endroits. Ceci permet de se passer de GPS.

Ces indications sont reportées dans la base de données, par exemple après avoir été mémorisées dans l'appareil de mesure ou directement transmises à un centre de contrôle qui contient la base de données. Cette base de données peut également comporter d'autres indications telles qu'un identifiant du tronçon, la vitesse moyenne pour parcourir ce tronçon, la vitesse en un point déterminé du tronçon, etc.

A titre d'exemple, l'axe A-C a été parcouru avec un tel appareil de mesure. Les points dans lesquels des mesures ont été prises sont notés A, A1, A2, A3 et B pour un tronçon A-B de cet axe et B, B1, B2, B3, B4 et C pour un tronçon B-C de ce même axe.

Pour chaque point de mesure, on mémorise un identifiant d'une source de signaux électromagnétiques captés, ainsi que notamment l'intensité du signal capté. Dans la table de la figure 2, on a ainsi pour le point A, ses coordonnées géographiques $C1_a$ et $C2_a$, l'identifiant de la source S1 que l'appareil de mesure détecte au point A, noté ID1, l'intensité du signal reçu par l'appareil depuis cette source, notée $S1_a$, l'identifiant de la source S2, noté ID2, l'intensité de réception $S2_a$ et ainsi de suite pour toutes les sources captées. On procède de même pour tous les points de mesure des axes répertoriés.

Selon une forme de réalisation avantageuse, chaque point, chaque axe et/ou chaque tronçon d'axe peut être associé à une "signature", celle-ci étant formée des résultats des différentes informations et mesures disponibles pour chaque point.

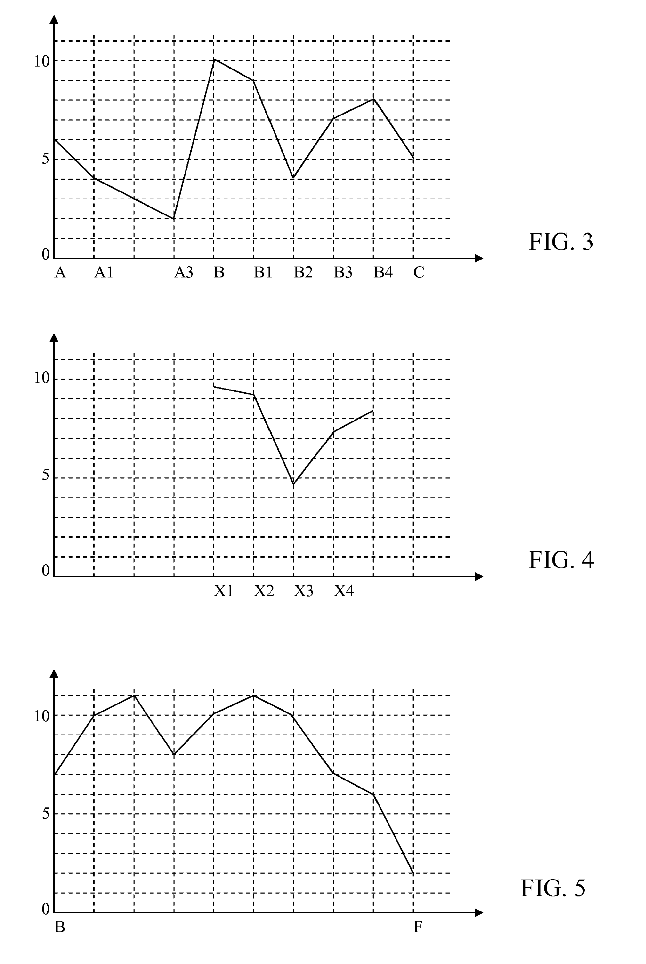

Afin de représenter graphiquement la signature utilisée dans le procédé de l'invention, il est supposé que les données de réception des signaux électromagnétiques sont traités de façon à obtenir une valeur numérique. La signature d'un tronçon ou d'un axe peut alors être représentée sous la forme d'une courbe en reliant les valeurs numériques associées à chaque point de mesure. Une telle courbe est représentée à la figure 3 pour l'axe A-C et à la figure 5 pour l'axe B-F.

D'autres formes de signatures pourraient bien entendu être utilisées. En particulier chaque point de mesure pourrait être associé à un ensemble de valeurs numériques et non à une seule valeur comme dans l'exemple illustré. Le choix d'utiliser une seule valeur numérique est fait ici uniquement pour permettre une représentation graphique de la signature.

## Elaboration d'une signature

La signature telle qu'utilisée dans le procédé de l'invention peut être formées de nombreuses manières différentes. Ces manières ont toutefois des caractéristiques communes qu'il convient de respecter pour que la signature soit utilisable. L'une de ces caractéristiques est que la signature doit être peu dispersive. Cela signifie que deux signatures obtenues à partir d'ensembles de mesures relativement proches doivent également être relativement proches. Si tel n'est pas le cas, un léger changement dans les résultats de la mesure pourrait aboutir à des résultats complètement différents, ce qui ne permettrai pas de retrouver la bonne signature.

Une autre caractéristique commune est que les signatures doivent pouvoir être distinguées les unes des autres. Il est en effet important que deux axes différents ne définissent pas la même signature, faute de quoi le procédé ne pourrait pas être utilisé.

Selon un mode de réalisation de l'invention, la signature pourrait être obtenue par la somme, pour toutes les sources visibles en un point donné, du produit de l'intensité de la source par son identifiant. Si l'intensité d'une source $ID_i$ est notée $S_i$, la signature Sig d'un point pourrait être

$$Sig = \sum (Id_i \times S_i)$$

La signature d'un axe peut alors être une courbe reliant l'ensemble des signatures des points de mesure.

Selon ce mode de réalisation, si l'intensité mesurée en un point change légèrement d'une mesure à l'autre, la signature changera également légèrement.

Un mode de réalisation de l'invention pourrait utiliser comme signature une fonction de type hash progressif. Une telle fonction hash permet, à partir d'un ensemble de données, de former une signature. Toutefois, il n'est pas possible à partir de la signature de retrouver les données d'origine. Ceci présente un intérêt dans la présente demande par le fait qu'une telle fonction permet de garantir la confidentialité des données. Le fait que le hash soit progressif permet d'éviter une dispersion trop grande de la signature.

Selon une variante, l'identifiant de la source peut être modifié avant d'être utilisé. Il est par exemple possible d'appliquer le traitement mathématique sur un nombre restreint de sources, par exemple les cinq sources depuis lesquelles l'intensité mesurée en un point donné est maximale. L'identifiant des sources peut être arbitrairement choisi par exemple de 1 à 5.

Il est également possible de normaliser la signature de façon à être indépendant de la sensibilité de l'appareil de mesure. Ceci peut se faire par exemple en attribuant une valeur 1 à l'intensité mesurée la plus grande et en définissant, pour les autres intensités mesurées, des pourcentages par rapport à cette valeur maximale.

## Positionnement d'un équipement mobile

Dans la deuxième phase, lorsqu'un utilisateur souhaite connaître sa localisation ou l'axe sur lequel il se trouve, il utilise son récepteur pour effectuer des mesures d'intensité de réception de signaux. Un récepteur utilisable est notamment un téléphone portable. En fonction du récepteur, les signaux utilisés peuvent être d'un type, de plusieurs ou de tous les types utilisés pour constituer la base de données.

La base de données peut par exemple être formée à partir de signaux utilisés en téléphonie mobile, des signaux bluetooth et de signaux de type WiFi. Selon l'équipement mobile utilisé, celui-ci peut ne capter que les signaux de téléphonie mobile, que les signaux bluetooth, que les signaux WiFi ou au contraire, deux ou trois types de signaux distincts.

Selon le mode de réalisation préféré de l'invention, le récepteur détermine les sources de signaux électromagnétiques qu'il est en mesure de capter, ainsi que l'intensité des signaux captés. Une telle mesure est répétée plusieurs fois, après un intervalle de temps qui peut être régulier.

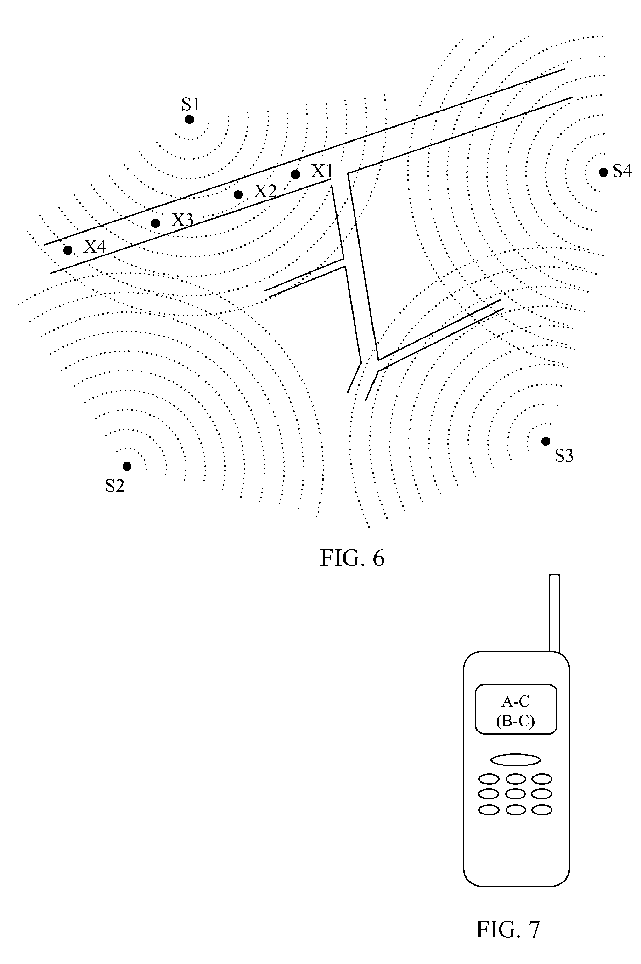

La figure 6 illustre cette étape du procédé. L'équipement mobile identifie les sources qu'il capte et mesure les intensités reçues aux points référencés X1, X2, X3 et X4.

L'ensemble ou au moins une partie des mesures effectuées est utilisé pour établir une "signature électromagnétique". Le traitement des mesures est effectué de manière similaire au traitement utilisé pour former la signature dans la base de données. La signature obtenue après traitement des mesures effectuées aux points X1, X2, X3 et X4 est représentée schématiquement par la figure 4.

La signature est comparée aux signatures mémorisées dans la base de données. Lorsqu'une correspondance est trouvée, il est possible d'indiquer sur quel tronçon se trouve l'équipement mobile.

En comparant la courbe de la figure 3 qui représente la signature du tronçon A-C à la courbe de la figure 4 qui représente les mesures effectuées par l'utilisateur, on peut en déduire que l'utilisateur ou son équipement mobile se trouve sur l'axe B-C.

Pour trouver une correspondance entre la signature obtenue grâce à l'envoi des résultats des mesures effectuées par l'équipement mobile et la signature mémorisée dans la base de données, différents algorithmes statistiques peuvent être mis en oeuvre. En pratique, on cherche à déterminer une "distance" entre une signature calculé et une signature mémorisée. L'axe cherché peut correspondre à la signature mémorisée la plus proche de la signature calculée, ou l'axe cherché peut être celui dont la distance de la signature par rapport à la signature calculée est inférieure à un seuil déterminé. Il est également possible de définir un indice de fiabilité. A titre d'exemple, une signature basée sur deux positions de l'équipement mobile pourrait correspondre à une fiabilité de 20%, une signature basée sur trois positions à 25% et une signature basée sur 10 position à 90% par exemple. En fonction de la fiabilité recherchée, on peut ainsi déterminer le nombre de positions à partir desquelles une mesure doit être effectuée.

Selon un mode de réalisation avantageux, les résultats des mesures effectuées par l'équipement mobile sont transmis au centre de contrôle contenant la base de données. Celui-ci calcule lui-même la signature électromagnétique en fonction des résultats des mesures qu'il a reçu.

Par ce moyen, il est possible de déterminer l'axe sur lequel se trouve l'équipement mobile de façon aussi rapide que possible. Imaginons que l'équipement mobile n'a envoyé qu'un seul ensemble de mesures. Généralement, ceci ne permet pas de localiser l'axe du fait que la précision est insuffisante. Lorsque l'appareil envoie un deuxième ensemble de mesures, la signature pourra être affinées. Après plusieurs ensembles de mesures, la signature électromagnétique sera suffisamment précise pour déterminer avec certitude ou quasi certitude sur quel axe se déplace l'équipement mobile.

Ce mode de réalisation présente l'avantage que l'axe peut être déterminé avec un minimum de mesures. En outre, aucun moyen de calculs n'est nécessaire dans l'équipement mobile. Celui-ci a pour seule tâche d'envoyer les résultats des mesures qu'il a effectuées.

Il est possible d'utiliser des informations supplémentaires par rapport à la position et les intensités des signaux reçus. Ces informations pourraient par exemple être la vitesse de déplacement. Une telle information peut être utilisée pour distinguer les déplacements effectués sur un axe proche d'un autre axe. Si une autoroute est proche d'une ligne de chemin de fer, la vitesse mesurée pourra être utilisée pour déterminer si l'utilisateur se déplace dans le train, avec une vitesse constante connue de la base de données, ou sur l'autoroute, avec une vitesse qui peut être variable et différente de la vitesse du train.

Selon une variante, l'équipement mobile peut contenir au moins une partie de la base de données et disposer de moyens de calculs. Dans ce cas, les mesures d'intensité effectuées par l'équipement mobile sont traitées dans cet équipement qui détermine lui-même la signature et effectue la comparaison avec les signatures qu'il a dans sa base de données. L'équipement peut ainsi déterminer sur quel axe il se trouve sans avoir recours au centre de contrôle.

Il est également possible de prévoir une variante hybride dans laquelle, à l'origine, l'équipement mobile ne contient aucune information de la base de données. Les informations pertinentes sont stockées progressivement dans une mémoire de l'équipement mobile. Ces informations sont celles qui correspondent aux positions ou aux axes sur lesquels l'équipement mobile se déplace. Ainsi, la première fois que l'utilisateur est repéré comme ayant déplacé son équipement mobile sur l'axe A-C, la partie de la base de données relative à cet axe sera mémorisée dans la mémoire de cet équipement mobile.

Cette variante a pour avantage que chaque équipement mobile contient des informations qui lui sont propres et qui lui seront utiles s'il se déplace une nouvelle fois sur le même axe.

En pratique, il est courant de se déplacer régulièrement sur les mêmes axes. Cette variante permet donc de diminuer la transmission d'informations de l'équipement mobile au centre de contrôle contenant la base de données, sans toutefois encombrer la mémoire de l'équipement mobile avec des informations dont la majorité seront inutiles. Les seules informations qui sont envoyées de l'équipement mobile au centre de contrôle sont celles correspondant à des signatures que l'équipement mobile n'est pas en mesure de reconnaître seul.

## Ajout d'éléments dans la base de données

Il est possible que lors du déplacement d'un équipement mobile, celui-ci détecte une borne ou une cellule non répertoriée dans la base de données. Dans le cas où l'équipement mobile est en mesure de déterminer sa position précise, les informations relatives à cette nouvelle borne et à la position sont transmises au centre de contrôle qui les intègre dans sa base de données.

Si la position précise ne peut pas être déterminées, ce qui est la plupart du temps le cas en pratique, une information peut être transmise au centre, en indiquant par exemple l'axe sur lequel l'équipement mobile se déplace ainsi qu'une information relative à la présence d'une borne non répertoriée. Cette information pourra initier une nouvelle campagne de mesures.

Si la position d'un équipement mobile peut être connue, par exemple grâce à la signature, il est également possible d'envoyer des corrections à la base de données. Ces corrections peuvent par exemple concerner un changement d'identifiant d'une borne ou des valeurs d'intensité modifiées. Ceci permet une mise à jour permanente et automatique de la base de données.

## Applications de l'invention / variantes

Il a été précisé précédemment que le procédé de l'invention n'a pas nécessairement pour objectif de déterminer la position absolue d'un utilisateur, mais plutôt sur quel axe il se déplace.

Ce procédé permet toutefois également de déterminer une position précise, en particulier dans le cas d'un déplacement à vitesse sensiblement constante sur le tronçon mesuré ou lorsque le nombre de mesures est assez grand.

La présente invention peut être appliquée en particulier pour la fourniture d'informations routières et touristiques. En déterminant l'axe sur lequel se trouve un équipement mobile, il est par exemple possible d'informer l'utilisateur d'éventuels problèmes de circulation tels que bouchons ou accidents. Il est également possible de l'informer sur des points ayant un intérêt particulier, tels que point touristique, manifestation ou autre. Dans cet exemple, les informations de localisation ou des informations dépendant de cette localisation sont transmises à l'utilisateur, sur son équipement mobile. Cette transmission se fait généralement par les moyens de téléphonie conventionnels.

Une autre application possible concerne la gestion tarifaire d'un transport. Un voyageur est détecté grâce à son équipement mobile, son déplacement est mesuré, puis facturé ultérieurement. Dans ce cas, les informations concernant l'itinéraire effectué ne sont pas nécessairement transmises à l'équipement mobile. Elles peuvent être simplement mémorisées dans le centre de contrôle pour un usage ultérieur ou être transmises à une entreprise de facturation par exemple.

Une application supplémentaire concerne la surveillance et la sécurité, puisqu'il est possible de déterminer si un équipement est par exemple sur l'axe sur lequel il est prévu qu'il se déplace. Toute déviation par rapport à cet axe peut être reporté ou signalé par une alarme par exemple.

Dans ce contexte, il est possible de prévoir des règles associées à l'équipement mobile, ces règles pouvant être implémentées dans l'équipement mobile lui-même ou dans le centre de contrôle.

Un exemple de règle pourrait être que sur l'axe A-C, la vitesse de l'équipement mobile, ou du véhicule dans lequel il est placé, ne doit pas dépasser 80 km/h. Une alarme peut retentir dans l'équipement mobile si cette règle n'est pas respectée. Dans cet exemple, la règle peut être implémentée dans l'équipement mobile.

Une autre règle pourrait être que l'équipement mobile ne doit pas quitter une certaine zone, définie par un ensemble d'axes répertoriés, entre 8h et 16h. Si la règle n'est pas respectée, une alarme peut être émise au niveau du centre de contrôle. Dans ce cas, la règle est implémentée dans ce centre de contrôle.

Le procédé de l'invention pourrait être utilisé également comme moyen de guidage.

Les informations échangées entre l'équipement mobile et le centre de contrôle peuvent utiliser des canaux connus tels que les sms (short message system) notamment ou les moyens de téléphonie conventionnels.

Afin de garantir la confidentialité des données échangées, celles-ci peuvent être chiffrées. Dans ce cas, l'équipement mobile est avantageusement inscrit dans le centre de contrôle. L'équipement mobile dispose d'une clé et d'un numéro d'identification unique, ce numéro unique et cette clé ou la clé correspondante en cas de chiffrement asymétrique, sont mémorisés dans le centre de contrôle.

## Revendications

1. Procédé de détermination d'au moins un axe sur lequel se déplace un équipement mobile, le procédé comportant les étapes de :

   - détermination par ledit équipement mobile, d'un premier jeu d'informations de réception relatives à des signaux électromagnétiques reçus par cet équipement mobile dans une première position sur ledit axe;
   - déplacement dudit équipement mobile sur cet axe, dans au moins une deuxième position distante de ladite première position;
   - détermination par ledit équipement mobile, d'un deuxième jeu d'informations de réception relatives à des signaux électromagnétiques reçus par cet équipement mobile dans ladite deuxième position;
   - élaboration d'une signature à partir desdits premier et deuxième jeux d'informations de réception;
   - recherche dans une base de données, d'une signature mémorisée, similaire à la signature obtenue à partir desdits premier et deuxième jeux d'informations de réception;
   - recherche de l'axe correspondant à ladite signature mémorisée obtenue par la base de données.

2. Procédé selon la revendication 1, **caractérisé en ce que** lesdites indications relatives à la réception de signaux électromagnétiques sont des indications d'intensité des signaux reçus par l'équipement mobile.

3. Procédé selon la revendication 1 ou 2, **caractérisé en ce que** lesdites indications relatives à la réception de signaux électromagnétiques comprennent un identifiant de l'émetteur des signaux reçus par l'équipement mobile.

4. Procédé selon la revendication 1, **caractérisé en ce que** l'élaboration de ladite signature à partir des informations de réception est faite dans un centre de contrôle.

5. Procédé selon la revendication 1, **caractérisé en**

**ce que** l'élaboration de ladite signature à partir des informations de réception est faite dans l'équipement mobile.

6. Procédé selon la revendication 1, **caractérisé en ce que** la base de données est mémorisée dans un centre de contrôle et **en ce que** la recherche d'une signature similaire à la signature obtenue à partir des informations de réception est faite dans ce centre de contrôle.

7. Procédé selon la revendication 1, **caractérisé en ce qu'**au moins une partie de la base de données est mémorisée dans l'équipement mobile et **en ce que** la recherche d'une signature similaire à la signature obtenue à partir des informations de réception est faite au moins en partie dans cet équipement mobile.

8. Procédé selon la revendication 1 et 6, **caractérisé en ce que** la recherche d'une signature similaire à la signature obtenue à partir des informations de réception est faite dans une premier temps dans ledit équipement mobile, puis, si aucun correspondance n'a été trouvée, dans ledit centre de contrôle.

9. Procédé selon la revendication 1, **caractérisé en ce qu'**il comporte une étape d'indication de l'axe sur lequel se déplace l'équipement mobile.

10. Procédé selon la revendication 9, **caractérisé en ce qu'**il comporte en outre une étape d'indication d'un point sur cet axe.

11. Procédé selon la revendication 1, **caractérisé en ce que** les signaux électromagnétiques reçus par ledit équipement mobile sont émis par au moins l'un des types d'émetteurs suivants : émetteur de téléphonie mobile, borne wifi, borne Wimax, satellite.

FIG. 1

|  | C1 | C2 | ID1 | S1 | ID2 | S2 | ID3 | S3 | ... |
|---|---|---|---|---|---|---|---|---|---|
| **A** | $C1_a$ | $C2_a$ | ID1 | $S1_a$ | ID2 | $S2_a$ | ID3 | $S3_a$ | ... |
| **A1** | $C1_{a1}$ | $C2_{a1}$ | ID1 | $S1_{a1}$ | ID2 | $S2_{a1}$ | ID3 | $S3_{a1}$ | ... |
| **A2** | $C1_{a2}$ | $C2_{a2}$ | ID1 | $S1_{a2}$ | ID2 | $S2_{a2}$ | ID3 | $S3_{a2}$ | ... |
| **A3** | $C1_{a3}$ | $C2_{a3}$ | ID1 | $S1_{a3}$ | ID2 | $S2_{a3}$ | ID3 | $S3_{a3}$ | ... |
| **B** | $C1_b$ | $C2_b$ | ID1 | $S1_b$ | ID2 | $S2_b$ | ID3 | $S3_b$ | ... |
| **B1** | $C1_{b1}$ | $C2_{b1}$ | ID1 | $S1_{b1}$ | ID2 | $S2_{b1}$ | ID3 | $S3_{b1}$ | ... |
| **B2** | $C1_{b2}$ | $C2_{b2}$ | ID1 | $S1_{b2}$ | ID2 | $S2_{b2}$ | ID3 | $S3_{b2}$ | ... |
| **B3** | $C1_{b3}$ | $C2_{b3}$ | ID1 | $S1_{b3}$ | ID2 | $S2_{b3}$ | ID3 | $S3_{b3}$ | ... |
| **B4** | $C1_{b4}$ | $C2_{b4}$ | ID1 | $S1_{b4}$ | ID2 | $S2_{b4}$ | ID3 | $S3_{b4}$ | ... |
| **C** | $C1_c$ | $C2_c$ | ID1 | $S1_c$ | ID2 | $S2_c$ | ID3 | $S3_c$ | ... |
| **...** | ... | ... | ... | ... | ... | ... | ... | ... | ... |

FIG. 2

FIG. 3

FIG. 4

FIG. 5

FIG. 6

A-C
(B-C)

FIG. 7

Europäisches
Patentamt

European
Patent Office

Office européen
des brevets

# RAPPORT DE RECHERCHE EUROPEENNE

Numéro de la demande

EP 08 16 4359

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/122695 A1 (WANG JACKSON KIT [CA] ET AL) 29 mai 2008 (2008-05-29) * alinéas [0002], [0015], [0016], [0060], [0063], [0093]; figures 1a,1b,2 * ----- | 1-11 | INV. G01S5/02 |
| X | US 2005/020278 A1 (KRUMM JOHN C [US] ET AL) 27 janvier 2005 (2005-01-27) * alinéas [0010], [0046] - [0059]; figures 1,2 * ----- | 1-11 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 13 mars 2009 | Kern, Olivier |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

                                                        .......
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 16 4359

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-03-2009

| Document brevet cité au rapport de recherche | | Date de publication | Membre(s) de la famille de brevet(s) | | Date de publication |
|---|---|---|---|---|---|
| US 2008122695 | A1 | 29-05-2008 | CA | 2570861 A1 | 19-01-2006 |
| | | | GB | 2431063 A | 11-04-2007 |
| | | | WO | 2006007442 A2 | 19-01-2006 |
| US 2005020278 | A1 | 27-01-2005 | AU | 2004203017 A1 | 10-02-2005 |
| | | | AU | 2004203018 A1 | 10-02-2005 |
| | | | BR | PI0402751 A | 24-05-2005 |
| | | | CA | 2472995 A1 | 22-01-2005 |
| | | | CN | 1607401 A | 20-04-2005 |
| | | | EP | 1500949 A1 | 26-01-2005 |
| | | | JP | 2005043355 A | 17-02-2005 |
| | | | KR | 20050011684 A | 29-01-2005 |
| | | | MX | PA04006633 A | 08-09-2005 |

EPO FORM P0460

Pour tout renseignement concernant cette annexe : voir Journal Officiel de l'Office européen des brevets, No.12/82